# EUROPÄISCHE PATENTSCHRIFT

(11) **EP 1 496 576 B1**
(45) Veröffentlichungstag und Bekanntmachung des Hinweises auf die Patenterteilung: **04.04.2012**
(21) Anmeldenummer: 04016065.7
(22) Anmeldetag: 08.07.2004
(51) Int. Cl.: H01R 13/53, H01R 43/24, H02G 15/068, B29C 45/14

(54) **Vorrichtung zum elektrischen Verbinden mit einer Energieversorgungsleitung für Mittel- oder Hochspannung sowie Verfahren zur Herstellung eines Isolierteils einer solchen Vorrichtung**
Device for electrical connection with a power supply line for medium or high voltage and process for manufacturing an insulating portion of such a device
Dispositif de connexion électrique avec une ligne d'alimentation en énergie pour moyenne et haute tension ainsi que procédé de fabrication d'une partie isolante d'un tel dispositif

(30) Priorität: 09.07.2003 DE 10332118
(43) Veröffentlichungstag der Anmeldung: 12.01.2005
(73) Patentinhaber: Pfisterer Kontaktsysteme GmbH, 73650 Winterbach (DE)
(72) Erfinder: Bäuerle, Gottfried, 70736 Fellbach (DE); Schuster, Martin, 73733 Esslingen (DE); Wendt, Eckhard, 73257 Köngen (DE)
(74) Vertreter: Bartels & Partner

(56) Entgegenhaltungen:
- DE-A1- 2 944 120
- DE-A1- 3 611 462
- DE-A1- 4 001 191
- DE-C1- 4 224 672
- JP-A- 4 038 113

## Beschreibung

Die Erfindung betrifft eine Vorrichtung zum elektrischen Verbinden mit einer Energieversorgungsleitung für Mittel- oder Hochspannung gemäß dem Oberbegriff des Anspruchs 1 sowie ein Verfahren zur Herstellung eines Isolierteils einer solchen Vorrichtung.

Bei den bekannten gattungsgemäßen Vorrichtungen, wie sie beispielsweise von der Anmelderin unter dem Kennzeichen CONNEX für Nennspannungen zwischen 1 kV und 150 kV angeboten werden, sind die Isolierteile zwecks Bereitstellung der erforderlichen Teilentladungsfreiheit und der geforderten mechanischen Eigenschaften aus einem qualitativ hochwertigen Gießharz hergestellt. Insbesondere bei höheren Spannungsebenen ist neben der Teilentladungsfreiheit des Isolierteils auch eine Feldsteuerung erforderlich. Zu diesem Zweck werden in die Gießform vom eigentlichen Kontaktteil separate Feldsteuerelemente eingesetzt und anschließend umgossen. Um den geforderten hohen Qualitätsstandard zu gewährleisten ist ein hoher Zeit- und damit Kostenaufwand erforderlich.

Aus der JP 04 038 113 A ist eine Epoxydharzeinheit mit eingebetteten Elektroden bekannt, wobei auf die Elektroden zwei Schichten halbleitender Lacke mit unterschiedlicher Viskosität aufgebracht werden, um die Oberfläche der Elektrode zu glätten.

Aus der DE 29 44 120 A1 ist ein elastisches Steuerelement aus Silikonkautschuk für Garnituren elektrischer Kabel bekannt.

Der Erfindung liegt daher die Aufgabe zugrunde, eine Verbindungsvorrichtung sowie ein Verfahren zur Herstellung des Isolierteils bereitzustellen, welche die Nachteile des Standes der Technik überwinden. Insbesondere soll die Vorrichtung ausgezeichnete mechanische und elektrische Eigenschaften aufweisen und die zugehörigen Isolierteile sollen kostengünstig und in hoher Qualität herstellbar sein.

Diese Aufgabe ist durch die im Anspruch 1 bestimmte Vorrichtung sowie das im nebengeordneten Anspruch bestimmte Verfahren gelöst. Besondere Ausführungsarten der Erfindung sind in den Unteransprüchen bestimmt.

Die Aufgabe ist bei einer Vorrichtung zum elektrischen Verbinden mit einer Energieversorgungsleitung für Mittel- oder Hochspannung, wobei die Vorrichtung ein Isolierteil und ein elektrisch leitfähiges Kontaktteil aufweist, dadurch gelöst, daß das Isolierteil aus einem thermoplastischen Kunststoff besteht, daß das Isolierteil durch Spritzformen hergestellt ist, und daß beim Spritzformen das Kontaktteil in die Spritzform eingelegt ist und unter Belassen von mindestens einer Zugangsöffnung von dem thermoplastischen Kunststoff umspritzt ist.

Vorzugsweise wird für das Spritzformen ein Spritzgießen verwendet, es mag aber auch Anwendungen geben, in denen beispielsweise ein Spritzpressen anwendbar ist. Durch das Einlegen des elektrisch leitfähigen Kontaktteils in die Spritzform und anschließendes Umspritzen ist gegenüber der separaten Herstellung des Isolierteils mit anschließendem Zusammenführen mit dem Kontaktteil der Vorteil verbunden, daß sich bereits beim Spritzformen ein inniger und für viele Anwendungen bereits ausreichend dichter Anlagekontakt zwischen Kontaktteil und Isolierteil ergibt.

Wenn darüber hinaus beispielsweise für die Verwendung der Verbindungsvorrichtung in schutzgasbefüllten Schaltanlagen eine Gasdichtheit zwischen Isolierteil und Kontaktteil gefordert ist, kann in einer besonderen Ausführungsart der Erfindung an mindestens einer Stelle des Übergangs vom Kontaktteil zum Isolierteil ein Dichtmittel angeordnet sein. Dieses Dichtmittel kann grundsätzlich auch einstückig von dem Isolierteil ausgebildet sein, beispielsweise in Form einer entsprechend ausgestalteten Dichtlippe, die durch einen gegebenenfalls vorhandenen Druckunterschied in dichtender Anlage haltbar ist. Vorzugsweise kommt jedoch ein separates Dichtmittel zur Anwendung, das insbesondere in eine von dem Isolierteil und dem Kontaktteil gebildeten Kammer nach dem Spritzformen einsteckbar ist. Hierzu kann das Isolierteil und/oder das Kontaktteil ein Rastmittel, beispielsweise eine Rastnase oder Rastlippe ausbilden, durch die ein korrekter Sitzt des Dichtmittels gewährleistet ist.

Das Kontaktteil ist vorzugsweise aus Aluminium hergestellt, wobei die Oberfläche an den geeigneten Stellen zur Herabsetzung des Kontaktwiderstandes mit einer Kontaktschicht versehen sein kann, beispielsweise versilbert sein kann. An der zur Weiterführung der elektrischen Verbindung vorgesehenen Stelle kann das Kontaktteil vorzugsweise einstückig einen oder mehrere linien- oder punktförmige Kontakte ausbilden zwecks Bereitstellen von definierten Kontaktstellen und Kontaktflächen.

An seiner dem Isolierteil zugeordneten Anlagefläche kann das Kontaktteil mindestens abschnittsweise eine Oberflächenstruktur aufweisen. Dadurch ist die Festigkeit der Verbindung zwischen Kontaktteil und Isolierteil weiter erhöht und insbesondere die Verdrehsicherheit des Kontaktteils gegenüber dem beispielsweise an einer Gehäusewand fest montierten Isolierteil.

In einer besonderen Ausführungsart der Erfindung bildet das Kontaktteil einstückig Steuerelemente aus zum Absteuern des elektrischen Feldes an den diesbezüglich kritischen Stellen. Durch die einstückige Ausbildung ist gewährleistet, daß auch bei den beim Spritzformen angewendeten hohen Prozeßdrücken die Verbindung zwischen Kontaktteil und Steuerelement und die Position und/oder Ausrichtung des Steuerelements erhalten bleibt. Erforderlichenfalls können über die einstückig ausgebildeten Steuerelemente hinaus auch noch weitere Steuerelemente vorgesehen sein, die auch in herkömmlicher Weise in die Spritzform eingelegt werden können.

In einer besonderen Ausführungsart der Erfindung handelt es sich bei der Verbindungsvorrichtung um eine Steckvorrichtung. Das Isolierteil bildet dabei einen Steckerkörper oder einen Buchsenkörper. In beiden Fällen kann das Isolierteil einen Konus aufweisen, beispielsweise einen Innenoder Außenkonus, der mit dem entsprechenden Gegenelement der Verbindungsvorrichtung zusammenwirkt, der seinerseits einen Außen- bzw. Innenkonus aufweist.

Die Erfindung betrifft auch ein Verfahren zum Herstellen eines Isolierteils einer erfindungsgemäßen Vorrichtung. Gemäß dem erfindungsgemäßen Verfahren wird zunächst ein elektrisch leitfähiges Kontaktteil in eine Spritzform eingelegt und anschließend ein thermoplastischer Kunststoff unter Bildung des Isolierteils um das Kontaktteil herum angeformt unter Belassen mindestens einer Zugangsöffnung zu dem Kontaktteil.

Der thermoplastische Kunststoff basiert oder besteht vorzugsweise aus einem teilkristallinen, partiell aromatischen Polyamid. Dadurch sind günstige mechanische und elektrische Eigenschaften der hergestellten Isolierteile gewährleistet. In einer besonderen Ausführungsart ist der thermoplastische Kunststoff darüber hinaus glasfaserverstärkt oder mineralverstärkt. Dadurch lassen sich Isolierteile herstellen, die kurzzeitig Temperaturen bis zu 300° ausgesetzt werden können.

In einer besonderen Ausführungsart der Erfindung erfolgt mindestens ein Teil des Spritzformvorgangs unter gegenüber Atmosphäre reduziertem Druck, Vakuum oder in einer mindestens teilweise Inertgas-Atmosphäre. Beispielsweise kann Schwefelhexafluorid (SF6) als Inertgas beim Spritzgießen verwendet werden.

Vorzugsweise wird die Masse des thermoplastischen Kunststoffs vor dem Spritzformen auf eine Temperatur von mehr als 180° Celsius, insbesondere mehr als 250° Celsius, und vorzugsweise zwischen 300° und 350° Celsius gebracht. Anschließend wird die so erhitzte Kunststoffmasse in die Form eingebracht, die eine Temperatur von mehr als 60° Celsius, insbesondere mehr als 90° Celsius, und vorzugsweise zwischen 100° und 160° Celsius aufweist.

In einer besonderen Ausführungsart werden der Kunststoffmasse keine Farbstoffe zugesetzt. Vielmehr wird beispielsweise die gelblich-graue Eigenfarbe der Kunststoffmasse unverändert gelassen, um anhand auftretender Verfärbungen oder auch dem Ausbleiben solcher Verfärbungen eine optimale Prozeßführung ablesen zu können. Außerdem sind durch die nicht-eingefärbte Kunststoffmasse Lunker und Risse im Isolierteil erkennbar.

Weitere Vorteile, Merkmale und Einzelheiten der Erfindung ergeben sich aus den Unteransprüchen und der nachfolgenden Beschreibung, in der unter Bezugnahme auf die Zeichnungen ein Ausführungsbeispiel im Einzelnen beschrieben ist. Dabei können die in den Ansprüchen und in der Beschreibung erwähnten Merkmale jeweils einzeln für sich oder in beliebiger Kombination erfindungswesentlich sein.
- Fig. 1: zeigt einen Querschnitt durch eine Verbindungseinrichtung nach dem Stand der Technik,
- Fig. 2: zeigt einen Querschnitt durch eine erfindungsgemäße Vorrichtung in einer gegenüber der Fig. 1 vergrößerten Darstellung,
- Fig. 3: zeigt einen Querschnitt durch das Kontaktteil der Vorrichtung der Fig. 2,
- Fig. 4: zeigt einen gegenüber der Darstellung in der Fig. 2 vergrößerten Ausschnitt aus dem Bereich des Übergangs von dem Isolierteil zu dem Kontaktteil im Bereich des Dichtmittels, und
- Fig. 5: zeigt eine perspektivische Ansicht der erfindungsgemäßen Vorrichtung der Fig. 2.

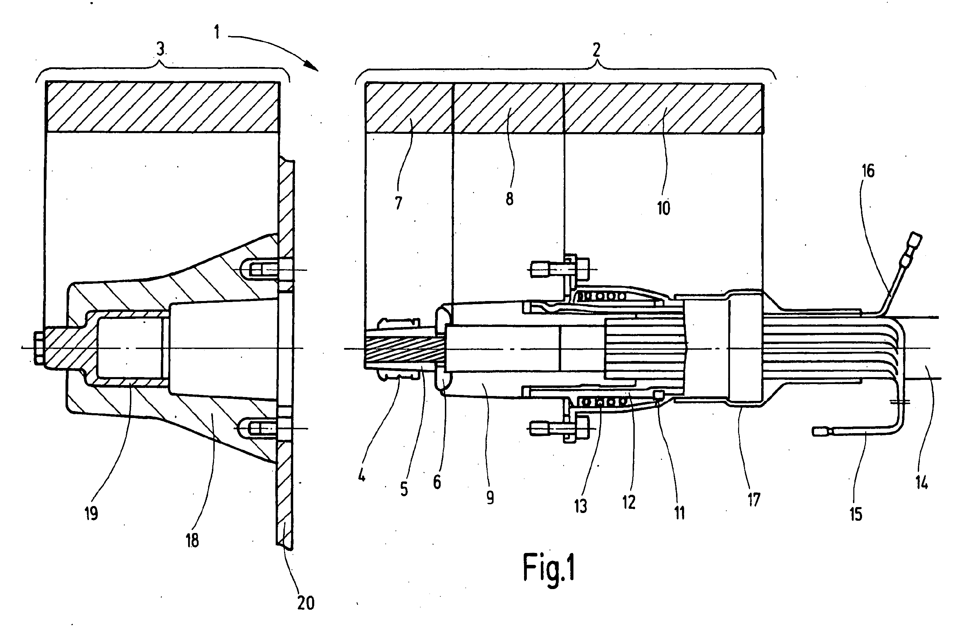

Die Fig. 1 zeigt einen Querschnitt durch eine Verbindungseinrichtung nach dem Stand der Technik, wie sie unter der Kennzeichnung CONNEX von der Anmelderin angeboten wird. Es handelt sich dabei um eine elektrische Steckverbindungseinrichtung, mit einem in der rechten Bildhälfte dargestellten Steckerelement 2 und einem in der linken Bildhälfte dargestellten Buchsenelement 3.

Das Steckerelement 2 weist an seinem dem Buchsenelement 3 zugewandten Ende ein aus einem Kontaktring 4, Spannkonus 5 und Druckstück 6 gebildetes Kontaktsystem 7 auf. Daran schließt sich ein Isolier- und Absteuerteil 8 an, das außenseitig ebenfalls ein, einen Außenkonus aufweisendes erstes Isolierteil 9 aufweist. An seinem von dem Kontaktsystem 7 beabstandeten Ende schließt sich an das Isolier- und Absteuerteil 8 das Gehäuse 10 an, das neben einer Flanschglocke 11, eine Druckhülse 12 und eine Druckfeder 13 aufweist. Endseitig sind aus dem Gehäuse 10 die Anschlußleitung 14, der Kabelschirm 15 und eine Meßleitung 16 aus einer Anschlußtülle 17 herausgeführt, die beispielsweise durch einen Schrumpfschlauch gebildet ist.

Das Buchsenelement 3 ist im wesentlichen aus dem als Isolierbuchse 18 ausgeführten zweiten Isolierteil und der Kontaktbuchse 19 gebildet. Das Buchsenelement 3 ist an eine Gehäusewand 20 anlegbar und mittels der die Flanschglocke 11 des Steckerelements 2 durchgreifenden Befestigungsschrauben zusammen mit dem Steckerelement 2 an der Gehäusewand festlegbar.

In der nachfolgenden Figurenbeschreibung wird ein Ausführungsbeispiel der erfindungsgemäßen Vorrichtung als Buchsenelement entsprechend der Einrichtung 1 der Fig. 1 beschrieben. In entsprechender Weise können auch die Isolierteile für das Steckerelement erfindungsgemäß ausgestaltet sein.

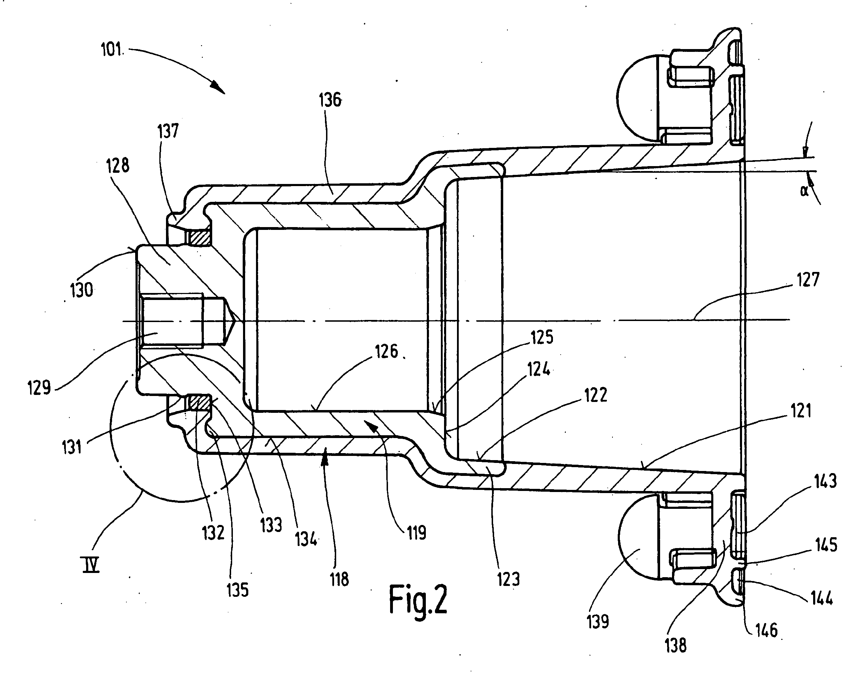

Die Fig. 2 zeigt einen Querschnitt durch eine erfindungsgemäße Vorrichtung 101 zum elektrischen Verbinden in Form eines Buchsenelements in einer gegenüber der Fig. 1 vergrößerten Darstellung. Das durch Spritzgießen aus einem thermoplastischen Kunststoff hergestellte Isolierteil 118 ist im wesentlichen glockenförmig mit weitgehend annähernd gleich großer Wandstärke von typisch 3 bis 5 mm.

In Richtung des zugehörigen, in der Fig. 2 nicht dargestellten Steckerelements weist das Isolierteil einen Innenkonus 121 mit einer Öffnungsweite von beispielsweise 70 mm auf, und einem Öffnungswinkel α, der an die Reibungskoeffizienten der Werkstoffe zwecks Vermeidung einer Selbstklemmung angepaßt ist und beispielsweise etwa 3° beträgt.
Der Innenkonus 121 des Isolierteils 118 fluchtet bündig mit dem Konus 122 des vom Kontaktteil 119 endseitig ausgebildeten ersten Steuerelements 123. An den Konus 122 schließt sich im wesentlichen rechtwinklig zur Längsachse 127 eine ringförmige Absatzfläche 124 an, die mittels einer Einführschräge 125 für das Kontaktsystem des zugehörigen Steckerelements übergeht in eine im wesentlichen zylindrische und insbesondere kreiszylindrische Kontaktfläche 126 mit einer lichten Weite von typisch etwa 40 mm. Die Vorrichtung 101 ist beispielsweise für Nennspannungen bis 36 kV ausgelegt.

Unter Weiterführung der elektrischen Verbindung weist das Kontaktteil 119 an seinem gegenüberliegenden Ende einen im wesentlichen zylindrischen und insbesondere kreiszylindrischen Anschlußzapfen 128 auf, der vorzugsweise einstückig ausgebildet ist und zentrisch eine Gewindebohrung 129 zur Befestigung beispielsweise einer den Strom weiterführenden Sammelschiene aufweist. Neben der übliche Einführschräge für die Gewindebohrung 129 ist die Stirnfläche des Anschlußzapfens 128 kreisförmig abgesetzt, so daß sich eine kreisringförmige Kontaktfläche 130 und mithin eine geometrisch definierte Kontaktfläche ergibt. Im dargestellten Ausführungsbeispiel sind die Abmessungen für einen Nennstrom von 800 Ampere ausgelegt. Hierzu beträgt der Durchmesser des Anschlußzapfens 128 etwa 30 mm, die Breite der ringförmigen Kontaktfläche etwa 4 mm und die Gewindebohrung 129 ist als M12-Gewindebohrung ausgelegt.

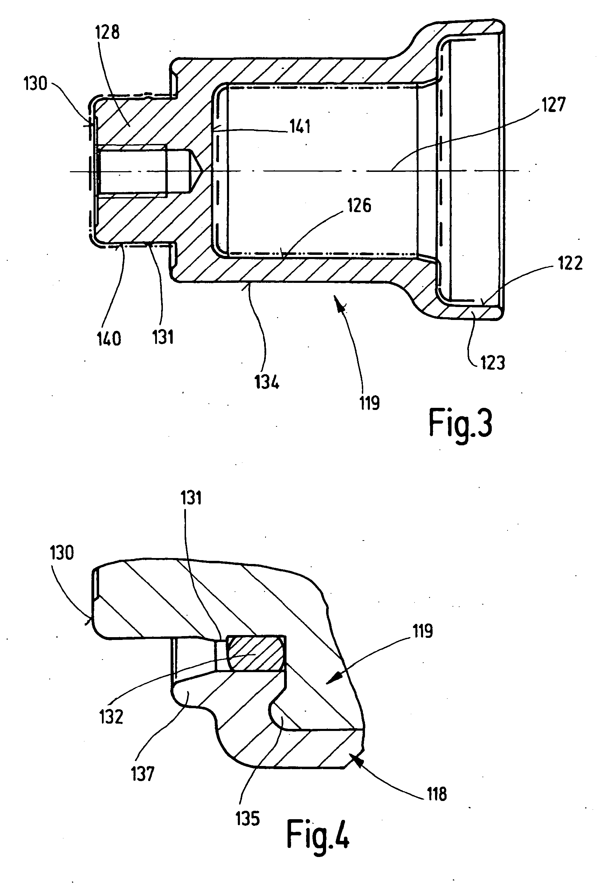

Wie in der nachfolgenden Fig. 4 noch deutlicher dargestellt, bildet das Kontaktteil 119 darüber hinaus einstückig einen umlaufenden Raststeg 131 aus, an den sich eine gemeinsam von dem Kontaktteil 119 und dem Isolierteil 118 gebildete ringförmige Kammer oder Ringnut für ein Dichtmittel 132 anschließt. Der Übergang von der im wesentlichen rechtwinklig zur Längsachse 127 verlaufenden zweiten Absatzfläche 133 zu der im wesentlichen zylindrischen Mantelfläche 134 des Hauptabschnittes des Kontaktteils 119 ist durch ein einstückig ausgebildetes, axial in Richtung auf die Kontaktfläche 130 vorspringendes zweites Steuerelement 135 in Form einer Ringwulst gebildet.

Das Isolierteil 118 weist an seinem dem Anschlußzapfen 128 zugeordneten Ende anschließend an einen im wesentlichen zylindrischen oder einen geringen Keilwinkel von weniger als 1° aufweisenden Abschnitt 136 eine sich auf der Innenseite konisch aufweitende Ringlippe 137 auf. Dadurch ist das Einsetzen bzw. Einklipsen des Dichtmittels 132 vereinfacht, für das im Ausführungsbeispiel ein handelsüblicher Dichtring verwendet werden kann. Dieses Dichtmittel 132 gewährleistet eine Gasdichtheit des Übergangs zwischen dem Isolierteil 118 aus dem umspritzten thermoplastischen Kunststoff und dem metallischen Kontaktteil 119, das beispielsweise aus Aluminium hergestellt ist. Mit Ausnahme der Gewindebohrung 129 ist das Kontaktteil 119 vorzugsweise rotationssymmetrisch in Bezug auf die Längsachse 127 ausgebildet.

An seinem, von dem Kontaktteil 119 wegweisenden Ende bildet das Isolierteil 118 einstückig einen ringförmigen Befestigungsflansch 138 aus.
In Umfangsrichtung sind an dem Flansch 138 äquidistant beispielsweise sechs Hutbuchsen 139 einstückig von dem Isolierteil 118 ausgebildet.

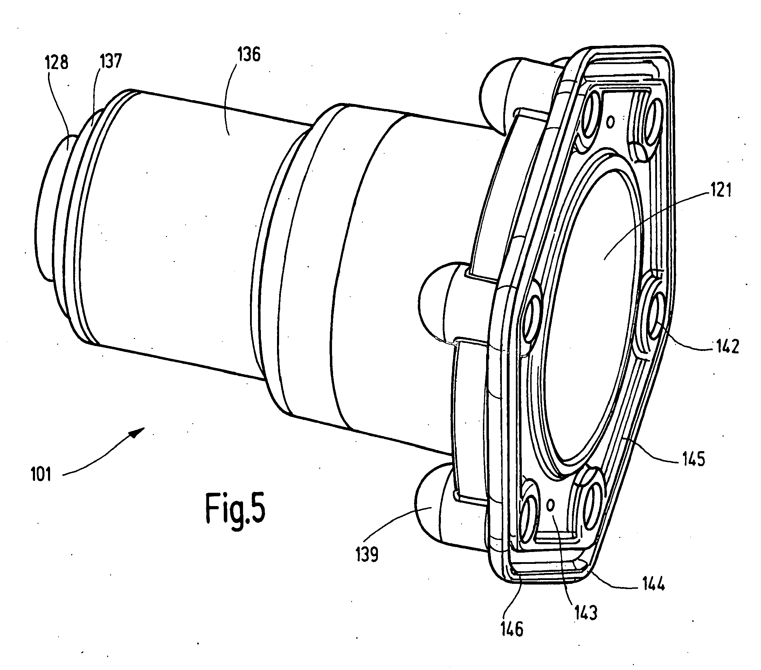

In jede dieser Hutbuchsen 139 ist vorzugsweise eine metallische Gewindebuchse 142 (siehe Fig. 5) eingespritzt, zwecks Befestigung der Vorrichtung 101 an einer Gehäusewand, gegebenenfalls auch unter mechanischem Verbinden mit dem zugeordneten Steckerelement.

Die Fig. 3 zeigt einen Querschnitt durch das Kontaktteil 119 der Fig. 2.
Im Bereich der Kontaktfläche 130 und der im wesentlichen, insbesondere mit Ausnahme des ringförmigen Raststeges 131, zylindrischen Mantelfläche 140 ist der Anschlußzapfen 128 mit einer den Kontaktwiderstand herabsetzenden Beschichtung versehen. Dies kann beispielsweise durch eine Silberschicht mit einer Mindestschichtdicke von 3 *µ*m gegeben sein, wie dies in Fig. 3 strichpunktiert angedeutet ist.

An der im wesentlichen zylindrischen Mantelfläche 134 weist das Kontaktteil 119 eine Oberflächenstruktur auf, beispielsweise eine Rändelung oder eine parallel zur Längsachse 127 ausgebildete Rillung.
Die zylindrische Bohrung 126 ist vorzugsweise vollflächig einschließlich der Bodenfläche 141 und bis in den Bereich des Konus 122 des ersten Steuerelements 123 ebenfalls mit einer Silberschicht versehen, beispielsweise in einer Dicke von etwa 5 µm.

Die Fig. 4 zeigt einen vergrößerten Ausschnitt aus dem Bereich des Übergangs von dem Isolierteil 118 zu dem Kontaktteil 119 im Bereich des Dichtmittels 132. Das Kontaktteil 119 bildet zweiseitig und das Isolierteil 118 einseitig eine ringnutförmige Kammer für das Dichtmittel 132, durch das eine gasdichte Verbindung gewährleistet ist. Mithin kann beispielsweise das im Bereich des Anschlußzapfens 128 anstehende Schutzgas, beispielsweise Schwefelhexafluorid (SF6), nicht in den in der Regel zur Atmosphäre hin offenen Bereich der zylindrischen Bohrung 126 gelangen.

Das ringwulstförmige zweite Steuerelement 135 steuert den gegebenenfalls mit Luft gefüllten Bereich der Kammer für das Dichtmittel 132 wirksam ab. Die sich konisch aufweitende Ringlippe 137 erleichtert das Einsetzen des Dichtmittels 132. Sofern das im Bereich des Anschlußzapfens 128 anstehende Gas gegenüber der Umgebung unter einem Überdruck steht, wird das Dichtmittel 132 hierdurch noch weiter in dichtende Anlage an dem Kontaktteil 119 und dem Isolierteil 118 gehalten.

Die Fig. 5 zeigt eine perspektivische Ansicht der erfindungsgemäßen Vorrichtung 101 der Fig. 2. In den die Zugangsöffnung bildenden Innenkonus 121 ist ein Steckerelement einsteckbar und die elektrische Verbindung kann mittels des Anschlußzapfens 121 weitergeführt werden. In jede der in Umfangsrichtung mit einem Winkelabstand von 60° angeordneten Hutbuchsen 139 ist ein metallischer Gewindeeinsatz 142 eingespritzt. Der Flansch 138 bildet an der Stirnfläche eine durchgehende und die Hutbuchsen miteinander verbindende Absenkung 143 aus. Diese dient im wesentlichen der Gewährleistung einer planen Anlage der Hutbuchsen 139 bzw. der zugehörigen Gewindeeinsätze 142 beispielsweise an einer zugehörigen Gehäusewand.

Radial außenseitig und durch einem im wesentlichen sechseckigen Steg 145 von der Absenkung 143 abgetrennt verläuft eine im wesentlichen ebenfalls sechseckförmige Nut 144, die außenseitig von einer ebenfalls im wesentlichen sechseckförmigen Lippe 146 begrenzt ist und zur Aufnahme eines separaten Dichtmittels dient. Hierzu ist die Lippe 146 axial gegenüber dem Steg 145 etwa zurückversetzt, um eine dichtende Anlage durch den Steg 145 und/oder das in die Nut 144 eingelegte Dichtmittel zu gewährleisten.

## Patentansprüche

1. Vorrichtung (101) zum elektrischen Verbinden mit einer Energieversorgungsleitung für Mittel- oder Hochspannung, wobei die Vorrichtung (101) ein Isolierteil (118) und ein elektrisch leitfähiges Kontaktteil (119) aufweist, **dadurch gekennzeichnet, daß** das Isolierteil (118) aus einem thermoplastischen Kunststoff besteht, daß das Isolierteil (118) durch Spritzformen hergestellt ist, und daß beim Spritzformen das Kontaktteil (119) in die Spritzform eingelegt ist und unter Belassen von mindestens einer Zugangsöffnung von dem thermoplastischen Kunststoff umspritzt ist.

2. Vorrichtung (101) nach Anspruch 1, **dadurch gekennzeichnet, daß** an mindestens einer Stelle des Überganges vom Kontaktteil (119) zum Isolierteil (118) ein Dichtmittel (132) angeordnet ist zur Herstellung einer gasdichten Verbindung zwischen Isolierteil (118) und Kontaktteil (119).

3. Vorrichtung (101) nach Anspruch 2, **dadurch gekennzeichnet, daß** das Dichtmittel (132) in eine von dem Isolierteil (118) und dem Kontaktteil (119) gebildete Kammer nach dem Spritzformen einsteckbar ist.

4. Vorrichtung (101) nach einem der Ansprüche 1 bis 3, **dadurch gekennzeichnet, daß** das Kontaktteil (119) einstückig Steuerelemente (123, 135) ausbildet zum Absteuern des elektrischen Feldes.

5. Vorrichtung (101) nach einem der Ansprüche 1 bis 4, **dadurch gekennzeichnet, daß** das Kontaktteil (119) einstückig einen linienförmigen Kontakt ausbildet zum Weiterführen der elektrischen Verbindung.

6. Vorrichtung (101) nach einem der Ansprüche 1 bis 5, **dadurch gekennzeichnet, daß** das Kontaktteil (119) an seiner dem Isolierteil (118) zugeordneten Anlagefläche mindestens abschnittsweise eine Oberflächenstruktur aufweist.

7. Vorrichtung (101) nach einem der Ansprüche 1 bis 6, **dadurch gekennzeichnet, daß** der thermoplastische Kunststoff des Isolierteils (118) ein Polyamid aufweist, insbesondere ein partiell aromatisches Polyamid.

8. Vorrichtung nach Anspruch 7, **dadurch gekennzeichnet, daß** der thermoplastische Kunststoff glasfaserverstärkt oder mineralverstärkt ist.

9. Vorrichtung (101) nach einem der Ansprüche 1 bis 8, **dadurch gekennzeichnet, daß** es sich um eine Steckvorrichtung handelt und das Isolierteil (118) einen Steckerkörper oder einen Buchsenkörper bildet.

10. Vorrichtung (101) nach einem der Ansprüche 1 bis 9, **dadurch gekennzeichnet, daß** das Isolierteil (118) einen Innen- oder Außenkonus aufweist.

11. Verfahren zum Herstellen eines Isolierteils (118) einer Vorrichtung (101) zum elektrischen Verbinden mit einer Energieversorgungsleitung für Mittel- oder Hochspannung, wobei ein elektrisch leitfähiges Kontaktteil (119) in eine Spritzform eingelegt wird und anschließend ein thermoplastischer Kunststoff unter Bildung des Isolierteils (118) um das Kontaktteil (119) unter Belassen mindestens einer Zugangsöffnung zu dem Kontaktteil (119) herum gespritzt wird.

12. Verfahren nach Anspruch 11, **dadurch gekennzeichnet, daß** der Spritzformvorgang mindestens teilweise unter Vakuum oder in einer Inertgas-Atmosphäre durchgeführt wird.

13. Verfahren nach Anspruch 11 oder 12, **dadurch gekennzeichnet, daß** die Kunststoffmasse vor dem Spritzformen auf eine Temperatur von mehr als 180 °C, insbesondere mehr als 250 °C, und vorzugsweise zwischen 300 und 350 °C gebracht wird, bevor die Kunststoffmasse in die Form eingebracht hat, die eine Temperatur von mehr als 60 °C, insbesondere mehr als 90 °C, und vorzugsweise zwischen 100 und 160 °C aufweist.

14. Verfahren nach einem der Ansprüche 11 bis 13, **dadurch gekennzeichnet, daß** der thermoplastische Kunststoff mit seiner Eigenfarbe verarbeitet wird, insbesondere ohne zusätzliche Farbstoffe.

## Claims

1. Device (101) for electrical connection with a power supply line for medium or high voltage, wherein the device (101) has an insulating part (118) and an electrically conductive contact part (119), **characterised in that** the insulating part (118) is made of a thermoplastic plastic, **in that** the insulating part (118) is manufactured by injection moulding, and **in that**, in the injection moulding, the contact part (119) is placed in the injection mould and overmoulded with the thermoplastic plastic, at least one access opening being left free.

2. Device (101) according to claim 1, **characterised in that** at at least one point of the transition from the contact part (119) to the insulating part (118) there is arranged a sealing means (132) for producing a gas-tight connection between the insulating part (118) and the contact part (119).

3. Device (101) according to claim 2, **characterised in that**, after the injection moulding, the sealing means (132) can be inserted into a chamber formed by the insulating part (118) and the contact part (119).

4. Device (101) according to any one of claims 1 to 3, **characterised in that** the contact part (119) forms integral control elements (123, 135) for controlling the electrical field.

5. Device (101) according to any one of claims 1 to 4, **characterised in that** the contact part (119) forms an integral linear contact for continuing the electrical connection.

6. Device (101) according to any one of claims 1 to 5, **characterised in that** the contact part (119) has a surface texture on at least part of its contact surface associated with the insulating part (118).

7. Device (101) according to any one of claims 1 to 6, **characterised in that** the thermoplastic plastic of the insulating part (118) comprises a polyamide, in particular a partially aromatic polyamide.

8. Device according to claim 7, **characterised in that** the thermoplastic plastic is glass- fibre-reinforced or mineral-reinforced.

9. Device (101) according to any one of claims 1 to 8, **characterised in that** it is a plug-type device and the insulating part (118) forms a plug body or a socket body.

10. Device (101) according to any one of claims 1 to 9, **characterised in that** the insulating part (118) has an inner or outer cone.

11. Process for the manufacture of an insulating part (118) of a device (101) for electrical connection with a power supply line for medium or high voltage, wherein an electrically conductive contact part (119) is placed an injection mould and then a thermoplastic plastic is injected moulded around the contact part (119) to form the insulating part (118), at least one access opening to the contact part (119) being left free.

12. Process according to claim 11, **characterised in that** the injection moulding operation is carried out at least partially under vacuum or in an inert gas atmosphere.

13. Process according to claim 11 or 12, **characterised in that**, prior to the injection moulding, the plastics material is brought to a temperature of more than 180°C, in particular more than 250°C and preferably from 300 to 350°C, before the plastics material has been introduced into the mould, which has a temperature of more than 60°C, in particular more than 90°C and preferably from 100 to 160°C.

14. Process according to any one of claims 11 to 13, **characterised in that** the thermoplastic plastic is processed in its inherent colour, in particular without additional dyes.

## Revendications

1. Dispositif (101) de connexion électrique à une ligne d'alimentation en énergie pour la moyenne et pour la haute tension, dans lequel le dispositif (101) comporte une partie (118) isolante et une partie (119) de contact conductrice de l'électricité, **caractérisé en ce que** la partie (118) isolante est en une matière plastique thermoplastique, **en ce que** la partie (118) isolante est fabriquée par moulage par injection et **en ce que**, lors du moulage par injection, la partie (119) de contact est introduite dans le moule d'injection et est recouverte de la matière plastique en laissant au moins une ouverture d'accès.

2. Dispositif (101) suivant la revendication 1, **caractérisé en ce qu'**au moins au point de la transition de la pièce (119) de contact à la partie (118) isolante est disposé un moyen (132) d'étanchéité pour la production d'une liaison étanche au gaz entre la partie (118) isolante et la partie (119) de contact.

3. Dispositif (101) suivant la revendication 2, **caractérisé en ce que** le moyen (132) d'étanchéité peut être enfiché après le moulage par injection dans une chambre formée par la partie (118) isolante et par la partie (119) de contact.

4. Dispositif (101) suivant l'une des revendications 1 à 3, **caractérisé en ce que** la partie (119) de contact forme d'une seule pièce des éléments (123, 125) de commande du champ électrique.

5. Dispositif (101) suivant l'une des revendications 1 à 4, **caractérisé en ce que** la partie (119) de contact forme d'une seule pièce un contact linéaire pour prolonger la liaison électrique.

6. Dispositif (101) suivant l'une des revendications 1 à 5, **caractérisé en ce que** la partie (119) de contact a, sur sa surface d'application associée à la partie (118) isolante, au moins par endroit, une structure de surface.

7. Dispositif (101) suivant l'une des revendications 1 à 6, **caractérisé en ce que** la matière plastique de la partie (118) isolante comporte un polyamide, notamment un polyamide partiellement aromatique.

8. Dispositif (101) suivant la revendication 7, **caractérisé en ce que** la matière plastique thermoplastique est renforcée par de la fibre de verre ou par une substance minérale.

9. Dispositif (101) suivant l'une des revendications 1 à 8, **caractérisé en ce que** c'est un dispositif à enfichage et la partie (118) isolante forme un corps de fiche ou un corps de douille.

10. Dispositif (101) suivant l'une des revendications 1 à 9, **caractérisé en ce que** la partie (118) isolante a un cône intérieur ou un cône extérieur.

11. Procédé de fabrication d'une partie (118) isolante d'un dispositif (101) de liaison électrique avec une ligne d'alimentation en énergie pour la moyenne tension ou la haute tension, dans lequel on met une partie (119) de contact conductrice de l'électricité dans un moule d'injection et on injecte ensuite de la matière plastique thermoplastique avec formation de la partie (118) isolante autour de la partie (119) de contact en laissant au moins une ouverture d'accès à la partie (119) de contact.

12. Procédé suivant la revendication 11, **caractérisé en ce que** l'on effectue l'opération de moulage par injection au moins en partie sous vide ou dans une atmosphère de gaz inerte.

13. Procédé suivant la revendication 11 ou 12, **caractérisé en ce qu'**on porte la masse de matière plastique avant le moulage par injection à une température de plus de 180°C, notamment de plus de 250°C, et de préférence comprise entre 300 et 350°C, avant d'avoir introduit la masse de matière plastique dans le moule, qui a une température de plus de 60°C, notamment de plus de 90°C, et de préférence comprise entre 100 et 160°C.

14. Procédé suivant l'une des revendications 11 à 13, **caractérisé en ce qu'**on transforme la matière plastique thermoplastique ayant sa couleur propre, notamment sans colorant supplémentaire.
